# EUROPEAN PATENT SPECIFICATION

(11) **EP 0 576 239 B1**
(45) Date of publication and mention of the grant of the patent: **20.08.1997**
(21) Application number: 93304836.5
(22) Date of filing: 21.06.1993
(51) Int. Cl.: H02K 13/10, H01R 39/48

(54) **Miniature motor**
Kleinmotor
Moteur miniature

(30) Priority: 23.06.1992 JP 164411/92; 28.10.1992 JP 289761/92
(43) Date of publication of application: 29.12.1993
(73) Proprietor: MABUCHI MOTOR KABUSHIKI KAISHA, Matsudo-shi, Chiba-ken (JP)
(72) Inventor: Hagiwara, Kenji, Mabuchi Motor Kabushiki Kaisha, Chiba-ken (JP); Shibuya, Isao, Mabuchi Motor Kabushiki Kaisha, Chiba-ken (JP); Yoshimura, Kazutoshi, Mabuchi Motor K.K., Chiba-ken (JP)
(74) Representative: Hitchcock, Esmond Antony

(56) References cited:
- EP-A- 0 209 617
- SU-A- 0 448 543
- PATENT ABSTRACTS OF JAPAN vol. 13, no. 179 (C-590) (3527) 26 April 1989 & JP-A-01 009 297

## Description

This invention relates to miniature motors of the type used for audio and video equipment, for example, and other precision machinery. It is concerned particularly with the achievement of stable performance by preventing abnormal wear on the sliding surface of the commutator, and the formation of polymers thereon.

An electric motor of the above type comprises a motor case in the form of a tubular body closed at one end with a case cap fitted to the open end. Permanent magnets are fitted within the case, and a rotor having an armature and a commutator, is mounted in bearings in the case cap and the closed end of the case to rotate with the armature in the magnetic field created by the magnets. Brushes making sliding contact with the commutator are connected to supply terminals. In such motors there is a risk of abnormal wear of the brushes as a consequence of arc discharge and joule heat, as well as contact with the commutator. Further, if the motor is operated in an atmosphere containing organic gases, this activity can result in the creation of an insulating polymer between the brushes and the commutator. Such a polymer increases the contact resistance, and leads to irregular operation of the motor. The overall effect of all these factors is to reduce the working life of the motor.

In an attempt to meet the above problems, it has been proposed to generate an atmosphere of polyvalent alcohol in the motor case, as described for example, in Japanese Patent Application No. Sho-60 (1985) - 162449. However, this was not found to significantly extend the service life of a motor of the above type. European Specification No. 0,209,617 describes various organic compounds for forming a vapour within a motor with the aim of prolonging its working life.

Japanese Specification No. 1-9297 relates to a grease for application to sliding switch contacts to avoid degradation of the switch performance. However, grease of the composition described therein may increase the contact resistance.

According to the present invention, in a motor of the type described above, the atmosphere within the motor case comprises at least one conditioning compound selected from polymethacrylate, polyacrylate, polyisobutylene, low molecular weight polyethylene, low molecular weight polypropylene, ethylene-propylene copolymer, polyvinyl acetate and polybutene. Typically, the atmosphere in the motor case comprises more than two said conditioning compounds.

The conditioned atmosphere in a motor according to the invention is normally derived from the compound or compounds in solid or liquid form. Thus, the compound or compounds can constitute or be impregnated in a member disposed within the case, normally in the vicinity of the brushes. In an alternative, the compound or compounds can be borne by the material of the case or cap, either as or within the material, or as a coating applied thereto.

The invention will now be described by way of example and with reference to the accompanying schematic drawing wherein:
Figure 1 is a longitudinal sectional view illustrating a typical miniature electric motor in which the invention can be exploited; and
Figures 2A and 2B are inner end views of case caps in embodiments of the invention.

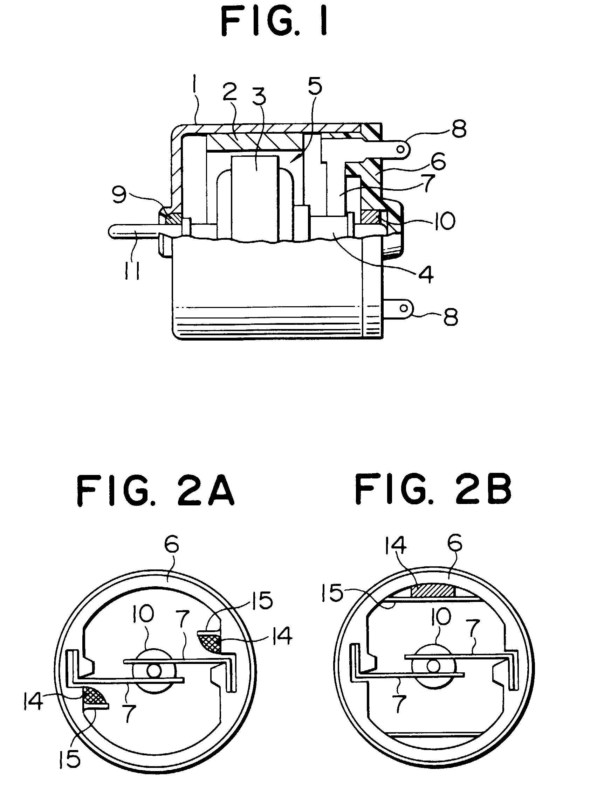

As shown in Figure 1, a case 1 made of a metallic material, such as mild steel, is formed into a bottomed hollow cylindrical shape and has permanent magnets 2 formed into an arc-segment shape fitted to the inner circumferential surface thereof. A case cap 6 made of a synthetic resin or other appropriate insulating material is fitted to the open end of the case 1. A rotor 5 comprising a shaft 11, an armature 3 facing the permanent magnets 2 and a commutator 4, is mounted in the case 1 for rotation in bearing 9, 10 provided on the bottom of the case 1 and the central part of the case cap 6. Brush arms 7 adapted to make sliding contact with the commutator 4 are housed in the case cap 6, together with input terminals 8 electrically connected thereto. The motor is operated in known manner by feeding electric current to the input terminals 8. The rotor 5 thus rotates in the magnetic field formed by the permanent magnets 2 to drive external equipment (not shown) via the shaft 11 on the output side.

In motors of this type brushes (not shown) provided on the tips of the brush arms 7 and the commutator 4 are subject to abnormal wear in a short period of time due to arc discharge, joule heat, or contact between the brushes and the commutator 4 at a sliding-contact area therebetween. If this abnormal wear occurs, a good electrical connection between the brushes and the commutator 4 cannot be maintained, and stability in motor performance deteriorates. As a consequence, the service life of the miniature motor is reduced.

When a miniature motor is used in an atmosphere containing organic gases, a black-coloured insulating polymer is produced on the sliding-contact area between the brushes and the commutator 4 due to arc discharge and joule heat, as mentioned above. This insulating polymer makes the state of contact between the brushes and the commutator 4 unstable, increasing contact resistance, and also reduces the life of the motor.

The case cap 6 shown in Figures 2A has polybutene-impregnated retaining members 14 held on mounting members 15 provided in the vicinity of the brush arms 7 on the inner end surface of the case cap 6. The cap shown in Figure 2B has polybutene-impregnated retaining members 14 held on mounting members 15 provided at a circumferential locations, central relative to the brush arms 7 on the case cap 6.

Miniature motors having the aforementioned polybutene-impregnated retaining members 14 were subjected to life tests.

As control samples, miniature motors with no atmospheric conditioning provided inside the motor, and miniature motors having an atmosphere comprising a polyvalent alcohol (diethylene glycol, for example) inside the motor, as disclosed in the Japanese Patent Application referred to above, were prepared.

### Test I

Table 1 shows the results of life tests in which the aforementioned miniature motors having a specification of 12 V, about 1.3 W, 4,400 rpm were subjected to repeated cycle tests of: 2-sec. stop-4-sec. clockwise revolution - 2-sec. stop-4-sec. counterclockwise revolution under a pulley load of 30g-cm.

**TABLE 1**

| Atmosphere | No. | Time elapsed till shutdown (hrs) | Average life (hrs) |
|---|---|---|---|
| This invention Polybutene | 1 | (1700) | More than 1700 |
| | 2 | (1700) | |
| | 3 | (1700) | |
| | 4 | (1700) | |
| | 5 | (1700) | |
| Control samples (1) Diethylene glycol | 1 | 372 | 480 |
| | 2 | 535 | |
| | 3 | 490 | |
| | 4 | 535 | |
| | 5 | 471 | |
| Control samples (2) Atmosphere | 1 | 338 | 407 |
| | 2 | 362 | |
| | 3 | 374 | |
| | 4 | 471 | |
| | 5 | 530 | |

As is evident from Table 1, the control samples (2) with no atmospheric conditioning failed after relatively short periods and exhibited an average service life of 407 hours. In the control samples (1), average life was found to be extended, but only by around 20% relative to the control samples (2). In both sample groups (1) and (2) the actual working life of each motor was highly variable. The miniature motors embodying this invention however, were able to survive without shutdown even after 1,700 hours of continuous operation, demonstrating an average service life of more than 4 times that of the control samples (2), and more than 3.5 times that of the control samples (1).

### Test II

Table 2 shows the results of life tests in which the aforementioned miniature motors having a specification of 5V, about 0.46 W, 15,000 rpm were subjected to the same repeated cycle tests as described above, with a 1Ω resistor connected in series and under a pulley load of 30g-cm.

**TABLE 2**

| Atmosphere | No. | Time elapsed till shutdown (hrs) | Average life (hrs) |
|---|---|---|---|
| This invention Polybutene | 1 | 235 | 227 |
| | 2 | 220 | |
| | 3 | 200 | |
| | 4 | 240 | |
| | 5 | 240 | |
| Control samples (1) Diethylene glycol | 1 | 75 | 56 |
| | 2 | 46 | |
| | 3 | 62 | |
| | 4 | 39 | |
| | 5 | 58 | |
| Control samples (2) Atmosphere | 1 | 40 | 50 |
| | 2 | 40 | |
| | 3 | 48 | |
| | 4 | 62 | |
| | 5 | 62 | |

As is evident from Table 2, the results are similar to those from test I, and the miniature motors of this invention exhibit an improved average service life 4 times that of the control samples (1), and more than 4.5 times that of the control samples (2).

### Test III

The same test as that of Test I was conducted on miniature motors according to the invention in which a respective conditioning compound was inserted or infiltrated in a gap between the case 1 and the magnets 2. As control samples, miniature motors (2) in which no atmosphere conditioning was provided, and miniature motors (1) in which polyvalent alcohol (diethylene glycol) were used as before.

**TABLE 3**

| Atmosphere | No. | Time elapsed till shutdown (hrs) | Average life (hrs) |
|---|---|---|---|
| This invention | | (1150) | Over 1150 |
| Polymethacrylate | | (1150) | Over 1150 |
| Polyacrylate | | (1150) | Over 1150 |
| Polyisobutylene | | (1150) | Over 1150 |
| Low mol. wt. polyethylene | | (1150) | Over 1150 |
| Low mol. wt. polypropylene | | (1150) | Over 1150 |
| Ethylene-propylene copolymer | | (1150) | Over 1150 |
| Polyvinyl acetate | | (1150) | Over 1150 |
| polybutene | | (1150) | Over 1150 |
| Control samples (1) Diethylene glycol | 1 | 481 | 488 |
| | 2 | 560 | |
| | 3 | 463 | |
| | 4 | 426 | |
| | 5 | 511 | |
| Control samples (2) Atmosphere | 1 | 420 | 411 |
| | 2 | 358 | |
| | 3 | 371 | |
| | 4 | 495 | |
| | 5 | 413 | |

As is evident from Table 3, the control samples (2) with no atmospheric conditioning failed after relatively short periods and exhibited an average service life of 411 hours. It was found that the control samples (1) showed an extended average life, but only by around 20% relative to that of the control samples (2). As in Test I, the actual working life of the motors in these sample groups was highly variable. The miniature motors of this invention however, with five units each having different atmospheres, were able to survive even after 1,150 hours of continuous operation. Thus, their average life was more than 2.8 times that of the control samples (2), or more than 2.4 times that of the control samples (1).

In this invention, an internal space defined by the motor case and the case cap is filled with or has an atmosphere comprising or derived from one or two or more than two atmospheres of polymethacrylate, polyacrylate, polyisobutylene, low molecular weight polyethylene, low molecular weight polypropylene, ethylene-propylene copolymer, polyvinyl acetate and polybutene. In order to form an atmosphere in the aforementioned internal space, a suitable porous material, such as absorbent wadding, felting and sponge is infiltrated with one or more of the aforementioned conditioning compounds and disposed at an appropriate location. Alternatively, one or more components of the motor such as the permanent magnets, the case, the armature, the commutator, the brushes, the brush arms, the case cap, the bearings, or the bearing oil may be impregnated, infiltrated, blended or otherwise loaded with one of more of the conditioning compounds. The compound or compounds can also be used directly in a solid form and fitted in the motor case onto or between components thereof. It will be appreciated that the compound or compounds can emit vapour in the motor case to generate the conditioning atmosphere. In short, any means that can form an atmosphere of, comprising or derived from the aforementioned conditioning compounds in the sliding-contact area between the commutator and the brushes may be used.

Polymethacrylate used in this invention may be either of a commonly used non-dispersion type having the general formula 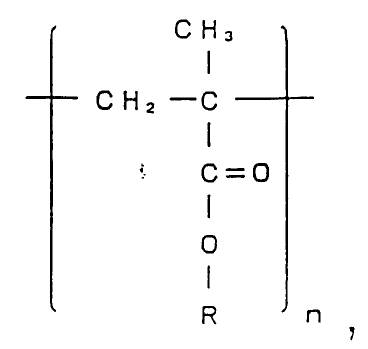 or of a dispersion type having the general formula

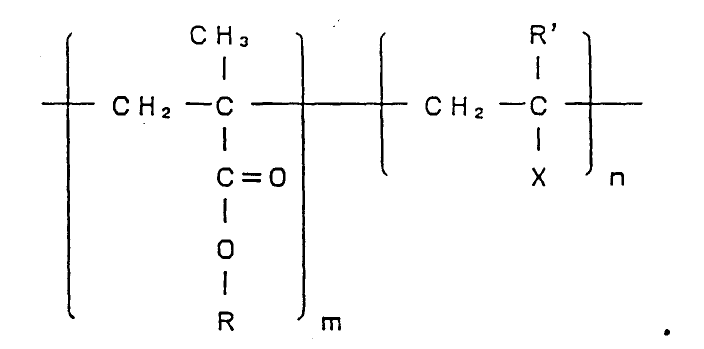

Polyacrylate used in this invention may be of a commonly used non-dispersion type having the general formula 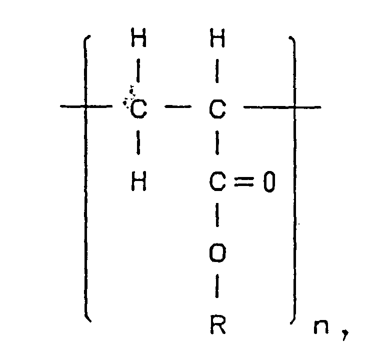 or may be of a dispersion type having the general formula

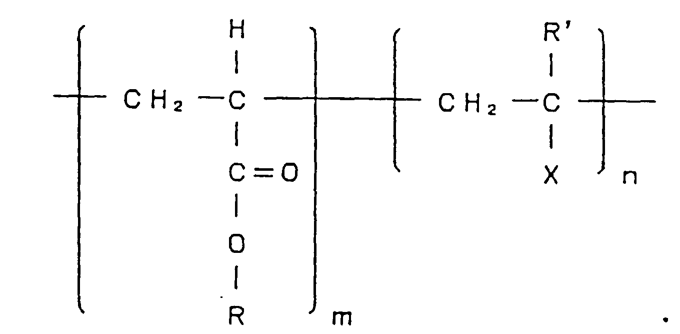

The structural formula of polyisobutylene is

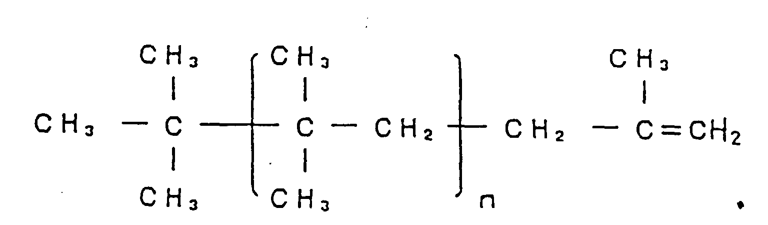

The structural formula of low molecular weight polyethylene used in this invention is

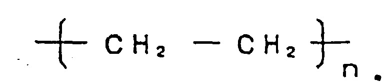

The structural formula of low molecular weight polypropylene is

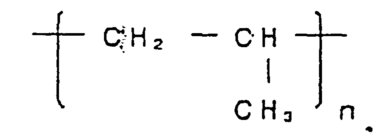

The structural formula of ethylene-propylene copolymer is

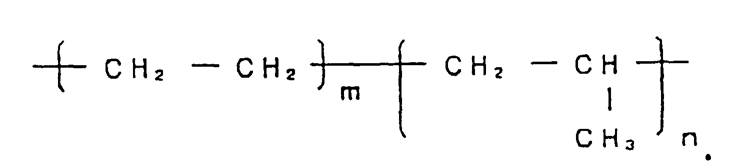

The structural formula of polyvinyl acetate used in this invention is

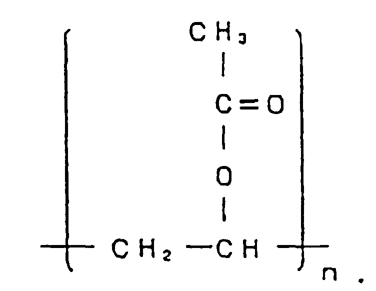

Polybutene used in this invention may be either of a general type having the general formula 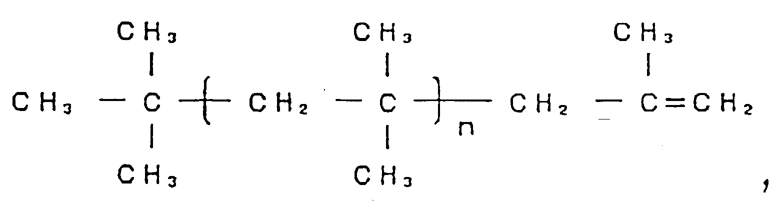 or a hydrogenated type having the general formula

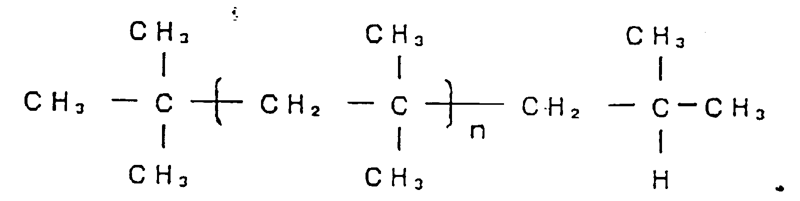

With the conditioning compound or compounds installed as described above, vapour will gradually evaporate to create the desired atmosphere in the motor case. The conditioning compounds used in this invention are hard to decompose or oxidize at normal temperatures, stable to light and heat, and have excellent weather and aging resistance. Although they have good dielectric properties, they form a monomolecular film-polymolecular film when adsorbed. Consequently, the conditioning compounds never affect the stability of motor current waveforms or contact resistance between the commutator and the brushes due to their tunnel effect. Further the conditioning compounds can prevent or at least inhibit the initial wear of the commutator and formation of insulating polymers even in an atmosphere of an organic gas. Thus, this invention can reduce and stabilize contact resistance, stabilize motor performance, and extend the service life of miniature motors.

## Claims

1. A miniature motor comprising a motor case (1) in the form of a tubular body closed at one end with a case cap (6) fitted to the open end; permanent magnets (2) fitted within the case (1); a rotor (5) having an armature (3) and a commutator (4), mounted in bearings (9,10) in the case cap (6) and the closed end of the case to rotate with the armature in the magnetic field created by the magnets (2); and brushes (7) making sliding contact with the commutator (4) and connected to supply terminals (8)
CHARACTERISED IN THAT
the atmosphere within the motor case (1) comprises at least one conditioning compound selected from polymethacrylate, polyacrylate, polyisobutylene, low molecular weight polyethylene, low molecular weight polypropylene, ethylene-propylene copolymer, polyvinyl acetate and polybutene.

2. A miniature motor according to Claim 1 wherein the atmosphere in the motor case (1) comprises more than two said conditioning compounds.

3. A miniature motor according to Claim 1 or Claim 2 including a retaining member (14) impregnated with said at least one conditioning compound.

4. A miniature motor according to Claim 3 wherein the retaining member (14) is mounted in the vicinity of the brushes (7) on the inner end surface of the case cap (6).

5. A miniature motor according to Claim 3 or Claim 4 wherein the retaining member (14) is received in a cavity defined by at least one of the case (1) and the case cap (6).

6. A miniature motor according to Claim 5 wherein said cavity is defined by the case (1) and the case cap (6).

7. A miniature motor according to Claim 1 or Claim 2 wherein said at least one conditioning compound is borne by the material of at least one of the case (1) and the case cap (6).

8. A miniature motor according to Claim 1 or Claim 2 wherein said at least one conditioning compound is deposited on at least one of the case (1) and the case cap (6).

## Patentansprüche

1. Kleinmotor mit einem Motorgehäuse (1) in Form eines röhrenförmigen Körpers, der an einem Ende durch eine Gehäusekappe (6), die in das offene Ende eingepaßt ist, geschlossen ist; Permanentmagneten (2), die in das Gehäuse (1) eingepaßt sind; einem Läufer (5), der einen Anker (3) und einen Kommutator (4) aufweist und in Lagern (9, 10) in der Gehäusekappe (6) und in dem geschlossenen Ende des Gehäuses montiert ist, damit er mit dem Anker in dem durch die Magnete (2) erzeugten Magnetfeld rotieren kann; sowie Bürsten (7), die einen Schleifkontakt mit dem Kommutator (4) herstellen und mit Versorgungsanschlüssen (8) verbunden sind,
**dadurch gekennzeichnet,**
daß die Atmosphäre innerhalb des Motorgehäuses (1) mindestens eine Konditionierverbindung enthält, die aus der Gruppe Polymethacrylat, Polyacrylat, Polyisobutylen, niedermolekulares Polyethylen, niedermolekulares Polypropylen, Ethylen/Propylen-Copolymerisat, Polyvinylacetat und Polybuten ausgewählt ist.

2. Kleinmotor gemäß Anspruch 1, wobei die Atmosphäre in dem Motorgehäuse (1) mehr als zwei der Konditionierverbindungen enthält.

3. Kleinmotor gemäß Anspruch 1 oder 2, enthaltend ein Aufnahmeteil (14), das mit mindestens einer Konditionierverbindung imprägniert ist.

4. Kleinmotor gemäß Anspruch 3, wobei das Aufnahmeteil (14) an der inneren Endfläche der Gehäusekappe (6) in der Nähe der Bürsten (7) montiert ist.

5. Kleinmotor gemäß Anspruch 3 oder 4, wobei das Aufnahmeteil (14) in einer Aushöhlung vorhanden ist, die entweder in dem Gehäuse (1) oder in der Gehäusekappe (6) vorgesehen ist.

6. Kleinmotor gemäß Anspruch 5, wobei die Aushöhlung durch das Gehäuse (1) und die Gehäusekappe (6) definiert ist.

7. Kleinmotor gemäß Anspruch 1 oder 2, wobei mindestens eine Konditionierverbindung von dem Material des Gehäuses (1) oder der Gehäusekappe (6) erzeugt wird.

8. KLeinmotor gemäß Anspruch 1 oder 2, wobei mindestens eine Konditionierverbindung auf dem Gehäuse (1) oder der Gehäusekappe (6) abgeschieden ist.

## Revendications

1. Un moteur miniature comprenant un boîtier de moteur (1) sous la forme d'un corps tubulaire fermé à une extrémité avec un capuchon de boîtier (6) adapté à l'extrémité ouverte; des aimants permanents (2) logés dans le boîtier (1), un rotor (5) ayant une armature (3) et un commutateur (4) monté dans des paliers (9, 10) dans le capuchon de boîtier (6) et l'extrémité fermée du boîtier pour tourner avec l'armature dans le champ magnétique créé par les aimants (2) et des balais (7) procurant un contact coulissant avec le commutateur (4) et reliés aux bornes d'alimentation (8), caractérisé en ce que l'atmosphère dans le boîtier de moteur (1) comprend au moins un composé de conditionnement choisi parmi le polyméthacrylate, le polyacrylate, le polyisobutylène, le polyéthylène de faible poids moléculaire, le polypropylène de faible poids moléculaire, un copolymère d'éthylène-propylène, l'acétate de polyvinyle et le polybutène.

2. Un moteur miniature selon la revendication 1, dans lequel l'atmosphère dans le boîtier de moteur (1) comprend plus de deux desdits composés de conditionnement.

3. Un moteur miniature selon la revendication 1 ou la revendication 2, comprenant un élément de retenue (14) imprégné avec au moins un dudit agent de conditionnement.

4. Un moteur miniature selon la revendication 3, dans lequel l'élément de retenue (14) est monté au voisinage des balais (7) sur la surface d'extrémité intérieure du capuchon de boîtier (6).

5. Un moteur miniature selon la revendication 3 ou la revendication 4, dans lequel l'élément de retenue (14) est reçu dans une cavité définie par au moins l'un du boîtier (1) et du capuchon de boîtier (6).

6. Un moteur miniature selon la revendication 5, dans lequel ladite cavité est définie par le boîtier (1) et le capuchon de boîtier (6).

7. Un moteur miniature selon la revendication 1 ou la revendication 2, dans lequel au moins un dudit composé de conditionnement est supporté par le matériau d'au moins l'un du boîtier (1) et du capuchon de boîtier (6).

8. Un moteur miniature selon la revendication 1 ou la revendication 2, dans lequel au moins un dudit composé de conditionnement est déposé sur au moins l'un du boîtier (1) et du capuchon de boîtier (6).
